# EUROPÄISCHE PATENTSCHRIFT

(11) **EP 4 201 618 B1**
(45) Veröffentlichungstag und Bekanntmachung des Hinweises auf die Patenterteilung: **18.03.2026**
(21) Anmeldenummer: 22213348.0
(22) Anmeldetag: 14.12.2022
(51) Int. Cl.: B28B 1/00, B28B 23/02, B28B 3/26, B29C 48/02, B29C 48/285, E04G 21/04, B33Y 10/00, B33Y 30/00, B29C 48/00, B29C 48/154

(54) **VORRICHTUNG ZUM AUSBRINGEN EINES HYDRAULISCH AUSHÄRTENDEN BAUSTOFFES SOWIE DESSEN VERWENDUNG**
DEVICE FOR DISCHARGING A HYDRAULICALLY HARDENING BUILDING MATERIAL AND ITS USE
DISPOSITIF POUR DÉCHARGER UN MATÉRIAU DE CONSTRUCTION DURCISSABLE HYDRAULIQUEMENT ET SON UTILISATION

(30) Priorität: 21.12.2021 AT 510292021
(43) Veröffentlichungstag der Anmeldung: 28.06.2023
(73) Patentinhaber: Baumit Beteiligungen GmbH, 2754 Waldegg (AT)
(72) Erfinder: Artner, Eduard, 4040 Linz (AT); Weißmann, Peter, 2754 Waldegg (AT); Balog, Oliver, 2560 Grillenberg (AT); Peters, Stefan, 8010 Graz (AT); Trummer, Andreas, 8046 Stattegg (AT); Schmid, Robert, 8772 Traboch (AT); Hansemann, Georg, 8020 Graz (AT); Tapley, Joshua, 8077 Gössendorf (AT)
(74) Vertreter: Müllner, Martin

(56) Entgegenhaltungen:
- EP-A2- 1 217 142
- WO-A1-2021/040578
- WO-A1-2021/195375
- CH-A- 362 960
- JP-A- H05 138 636
- KR-A- 20200 142 925

## Beschreibung

### Technisches Gebiet

Die vorliegende Erfindung betrifft eine Vorrichtung zum Ausbringen eines hydraulisch aushärtenden Baustoffes, wie Beton, Mörtel, Bindemittel und dergleichen, wobei in den Baustoff zumindest ein weiteres Medium, beispielsweise Stahl, eingebracht wird, mit einer Düse zur Zufuhr des flüssigen, pastösen oder plastischen Baustoffes, wobei in die Düse zumindest ein Rohr zur Zufuhr des zumindest einen weiteren Mediums ragt und die Position des zumindest einen weiteren Mediums innerhalb des Querschnitts der Düse verstellbar ist.

### Stand der Technik

Von ausgehärteten zementgebundenen Baustoffen (Beton, Mörtel etc.) ist es bekannt, dass diese aufgrund ihrer Sprödigkeit trotz ihrer hervorragenden Druckfestigkeit nur relativ geringe Zugkräfte aufnehmen können (die Zugfestigkeit beträgt in der Regel nur ca. 1/10 der Druckfestigkeit). In der Praxis wirken auf Bauteile unterschiedlichste statische und dynamische Kräfte ein, darüber hinaus kommt es durch äußere Einflüsse und Expositionen wie Temperatur, Temperaturwechsel, Temperaturgradienten, Feuchte (Quellung, Schwindung), Regen, Schnee, behindertes freies Schwinden etc. und die Materialeigenschaften des Baustoffes (Schwindung, Dichte, thermische Ausdehnung etc.) im Bauteil zu Spannungszuständen unterschiedlichster Art. Diese Spannungen können bei Überschreiten der Zugfestigkeiten der Baustoffe zu Rissen führen. Daher verstärkt man derartige Baustoffe in der Regel mit sehr zugfesten Bewehrungs-Materialien, die auch eine gute Anbindung (Haftung bzw. mechanische Verbindung) und Verträglichkeit mit dem Baustoff haben (Stahl, Carbon, Polymerfaser (z. B. Polyester oder Aramide), Glasfasern (z. B. aus AR-Glas), Basalt, biogene Fasern etc.). Die Baustoffe interagieren in erster Linie mittels der Bindemittelkomponenten mit den Bewehrungsmaterialien. Diese Bewehrungsmaterialien können im Belastungsfall sehr hohe Zugkräfte aufnehmen und schützen das Bauteil vor Schäden (wie z. B. Rissen) bzw. ermöglichen es, dass Risse nicht zu einem Bauteilversagen führen, sondern die einwirkende Energie sich in vielen kleinen Rissen (Haarrissen) "entladen" kann und die Bauteilfunktionalität erhalten bleibt.

Für 3D-gedruckte Bauteile aus Beton bzw. Mörtel gab es bisher keine zufriedenstellenden Bewehrungs-Lösungen, die eine zielsichere, einfache, kostengünstige und automatisierte Verstärkung ermöglichen. Man hilft sich daher bisher mit Lösungen wie dem 3D-Druck von Hohl-Kanälen im Druckelement, um die spätere Einbringung von Verstärkungsmaterialien im Bauteil zu ermöglichen. Diese Kanäle werden in nachfolgenden Schritten mit konventioneller Bewehrung versehen und mit Beton oder Mörtel kraftschlüssig mit dem 3D-Objekt vergossen. Weitere Möglichkeiten sind die Zugabe von verstärkenden Fasern zum 3D-Beton bzw. Mörtel oder das nachträgliche Aufbringen von faserverstärkten Schichten auf 3D-gedruckte Bauteile (siehe die EP 3431172 A der Anmelderin).

Die Bewehrung kann auch während des 3D-Drucks bei Druckunterbrechung händisch in die Druckbahn (= PCL bzw. printed concrete layer) eingelegt als auch als Verbindung von übereinanderliegenden PCL's durch einen Verbinder (z.B. aus Metall) ausgeführt werden.

Auch für seilartige Bewehrungen gibt es bereits Teillösungen, die auch in der Patentliteratur beschrieben sind:

CN 108952004 A beschreibt eine Vorrichtung für den 3D-Druck von Beton, der mittels Stahlseilen verstärkt wird. Es kann allerdings nicht individuell gesteuert werden, wie viele Stahlseile verwendet werden oder wo sich die Stahlseile in dem gedruckten Betonquerschnitt befinden. Ebenfalls beschreibt WO 2021/076898 A das Einbringen mehrerer Verstärkungsseile oder Ähnlichem zur Verstärkung von Zement oder Beton.

Diese Lösungen weisen aber Mängel auf. Es werden immer nur dieselben Materialien zur Verstärkung verwendet. Weiters ist nachteilig, dass die Position der eingefügten Materialien im Querschnitt nicht steuerbar ist und dadurch auch Bereiche verstärkt werden, die keine Verstärkung benötigen. Beispielsweise ist es nicht sinnvoll, bei einem auf Biegung belasteten Bauteil die Bewehrung in der neutralen Faser oder nahe der neutralen Faser (meist ist dies die Mittelfläche) einzubringen, da dort kaum Zugkräfte oder Druckkräfte auftreten, oder in denen eine Bewehrung statisch wirkungslos ist. Außerdem sind die kontrollierte automatisierte Unterbrechung des Bewehrungsprozesses und die kontrollierte Wiederaufnahme des Bewehrungsprozesses nicht zufriedenstellend gelöst.

WO 2021/195375 A1 zeigt eine dreidimensionale Druckvorrichtung für Beton, in der eine Bewehrung in den Beton beim Druck eingebracht wird, wobei die Bewehrung durch ein drehbares Rohr eingebracht wird, sodass die Bewehrung entlang eines Kreises platziert werden kann. Es offenbart auch eine Vorrichtung nach dem Oberbegriff des Anspruchs 1.

EP 1217142 A2 zeigt eine Herstellung von Beton, bei der die Positionierung der Bewehrung entlang einer Achse bei Herstellung eines Formteils ermöglicht wird.

CH 362960 A zeigt eine Positionierung der Bewehrung durch Drehen eines Rohres. JP H05 138636 A ermöglicht nur eine einachsige Führung einer Bewehrung in einer Düse.

WO 2021/040578 A1 offenbart eine Drehung einer Düse, aber keine Positionierung innerhalb der Düse.

KR 20200142925 A offenbart eine Unterbrechungsvorrichtung für ein Verstärkungs- bzw. Bewehrungsmaterial.

Eine erfindungsgemäße Vorrichtung zum Ausbringen eines hydraulisch aushärtenden Baustoffes entspricht den in Anspruch 1 genannten Merkmale.

Die Einbringung verschiedener Materialien und deren Positionierung im gedruckten Querschnitt wird erfindungsgemäß dadurch gelöst, dass die Position des zumindest einen weiteren Mediums durch Drehung der Düse veränderbar ist und entweder das zumindest eine Rohr entlang einer Achse positionierbar ist oder die Position des weiteren Mediums innerhalb des Querschnitts der Düse durch Steuerung der Zufuhr des Baustoffes über eine Klappe verstellbar ist. Dadurch wird ermöglicht, das weitere Medium, beispielsweise Stahl, Carbon, Polymerfasern, Glasfasern, Basalt, biogene Fasern etc., genau zu positionieren, um 3D-gedruckten Baustoff nur an den gewünschten Stellen zu verstärken. Es können aber auch andere Medien hinzugefügt werden, wie beispielsweise Rohre oder Schläuche, die in der Konstruktion benötigt werden, wie Wasserrohre oder Rohre bzw. Kanäle, in denen Strom- oder andere Medienleitungen verlegt und geführt werden können. Auch die Zugabe von Zusatzstoffen, welche die Materialeigenschaften des Baustoffes oder Bindemittels verändern, können verwendet werden, beispielsweise ein Abbindebeschleuniger, Abbindeverzögerer oder andere funktionelle Additive oder Materialien. Durch das Positionieren (beispielsweise Verschieben) des Rohres wird die Platzierung entlang einer Achse ermöglicht. Dadurch kann, wenn die Achse durch den Mittelpunkt der Düse verläuft, die Exzentrizität des zweiten Mediums beliebig eingestellt werden. Unter Verwendung einer Klappe im oberen Teil der Düse kann auf einer Seite mehr Baustoff in die Düse geführt werden, sodass das weitere Medium auf eine Seite gedrückt bzw. verdrängt wird. Kombiniert mit einer drehbaren Düse kann nicht nur eine horizontale Verschiebung, sondern auch eine vertikale Platzierung des zweiten Mediums erreicht werden.

Eine vorteilhafte Ausführung besteht darin, dass zwei oder mehr Rohre vorgesehen sind, die alle positionierbar sind. Dadurch, dass diese Rohre positionierbar sind, können beispielsweise zwei verschiedene Bewehrungsmaterialien eingebracht werden und beide im jeweils gewünschten Bereich platziert werden. So ist es beispielsweise möglich, an beiden Seiten einer gedruckten Wand Bewehrungen zu platzieren und dann im Fall eines Übergangs zu einem Bereich, der Zugspannungen nur auf einer Seite aufweist, die Bewehrungen nur auf einer Seite einzubringen.

Das Problem der Unterbrechung und Wiederaufnahme der Einbringung des weiteren Mediums bzw. der Bewehrung wird vorteilhafterweise dadurch gelöst, dass zumindest eine Unterbrechungsvorrichtung vorgesehen ist, um die Zufuhr des zumindest einen weiteren Mediums zu unterbrechen. Indem man beispielsweise drei Schneidvorrichtungen als Unterbrechungsvorrichtungen für beispielsweise drei Stahlseile vorsieht, kann im Bauteil durch gezielte Verstärkung durch eine Mehrfachbewehrung, die nur an Orten mit hohen einwirkenden mechanischen Kräften eingebracht wird, die Gesamtmenge an verstärkenden Bewehrungsstahlseilen im Vergleich zu einer durchgehenden einfachen Bewehrung sogar reduziert werden. Auf diese Weise kann zum Beispiel die Bewehrung an Stellen, wo kaum Zugkräfte auftreten, reduziert ausgeführt werden mit beispielsweise nur einem oder zwei Stahlseilen, oder es kann auch ganz auf eine Bewehrung verzichtet werden.

In diesem Fall ist es zweckmäßig, wenn auch eine Zuführvorrichtung vorgesehen ist, um das Zuführen von zumindest einem weiteren Medium wiederaufzunehmen. Durch die Kombination der Unterbrechungsvorrichtung mit der Zuführvorrichtung kann die Zufuhr von Bewehrungen, Rohren, Schläuchen, Additiven und Zusatzstoffen etc. genau nach Bedarf unterbrochen und wiederaufgenommen werden.

Erfindungsgemäß werden die beschriebenen Ausführungsformen der Vorrichtung zum 3D-Druck verwendet. Dies ermöglicht das Drucken von Bauteilen, Teilen von Häusern (z.B. Wänden) oder sogar ganzen Häusern.

Besonders vorteilhaft ist es, wenn zumindest zwei verschiedene Medien eingebracht werden. Dies ermöglicht beispielsweise, ganz gezielt eine Seite des Bauteils mit einer stärkeren Bewehrung auszustatten als die andere Seite. Das ist natürlich dann besonders vorteilhaft, wenn eine Seite stärkere Zugbelastungen erfährt als die andere.

Vorzugsweise ist für die Verwendung vorgesehen, dass das weitere Medium oder zumindest eines der weiteren Medien ein Bewehrungsmaterial ist. Gerade das zumindest eine Bewehrungsmaterial ermöglicht, dass Bauteile, die einer Zugspannung unterliegen, so gedruckt werden, dass sie gezielt im Bereich der Zugspannung verstärkt werden. Das Bewehrungsmaterial kann beispielsweise seilförmig vorliegen, wodurch kleine Biegeradien ermöglicht werden.

Ein Vorteil entsteht, wenn zumindest zwei seilförmige Bewehrungsmaterialien mit unterschiedlichen Biegeradien verwendet werden, wobei, wenn eine Kontur, die einen engeren Radius vorsieht als zumindest ein Biegeradius der Bewehrungsmaterialien, nur die Bewehrungsmaterialien mit einem ausreichend kleinen Biegeradius eingebracht werden. Durch die Mehrzahl an verschiedenen Bewehrungsmaterialien ist es sowohl möglich, dickere Seile zur Bewehrung zu verwenden, um gegen hohe Zugkräfte zu schützen, als auch mit angepassten Werkstoffen kleine gedruckte Radien zu bewehren, bei denen die dickeren Seile aufgrund ihrer hohen Biegesteifigkeit nicht eingebracht werden können.

Weiters bevorzugt ist, dass die Position und Menge des Bewehrungsmaterials aufgrund der geforderten Zugfestigkeit bzw. Biegezugfestigkeit gesteuert wird. So kann entweder manuell oder durch Finite-Elemente-Berechnungen festgestellt werden, welche Zugbelastungen auf das Bauteil wirken und entsprechend der Zugbelastungen der Grad der Bewehrung festgelegt werden.

Um die Eigenschaften der Bewehrungsmaterialien zu verbessern ist es möglich, dass das Bewehrungsmaterial zur Verbesserung der Oberflächeneigenschaften oberflächenbehandelt ist. Beispielsweise können die Bewehrungsmaterialien aufgeraut, beschichtet oder getränkt werden, um eine bessere Einbringung/Haftung im 3D-gedruckten Baustoff zu erreichen. Außerdem können speziell geflochtene, ausgefranste Seile, Seilbündel bzw. Rovings oder fadenumwickelte und dadurch stabilisierte Seilbündel verwendet werden.

### Kurze Beschreibung der Zeichnungsfiguren

An Hand der beiliegenden Zeichnungen wird die vorliegende Erfindung näher erläutert. Es zeigt:

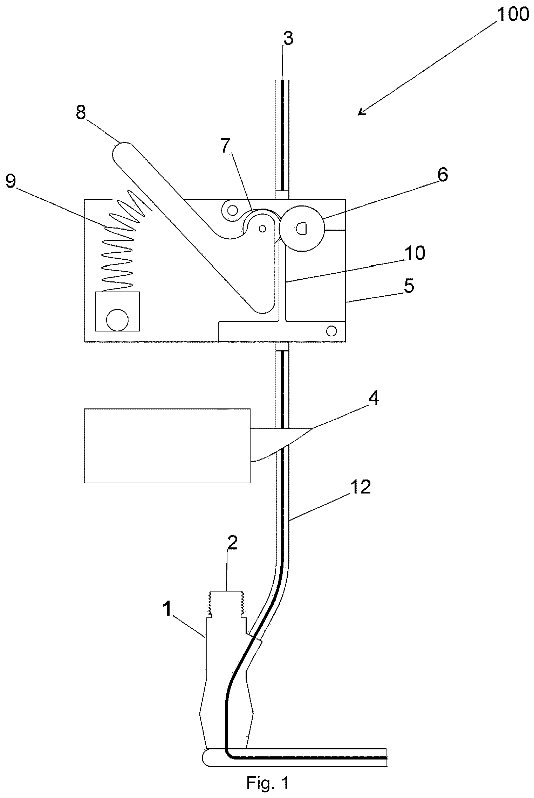

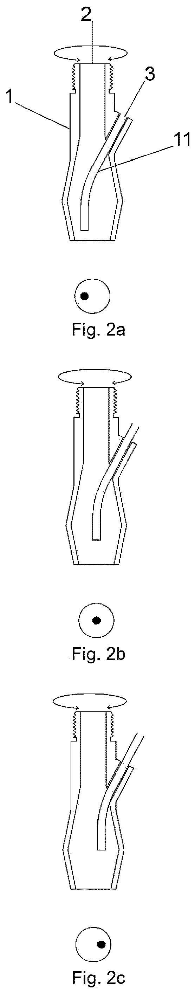

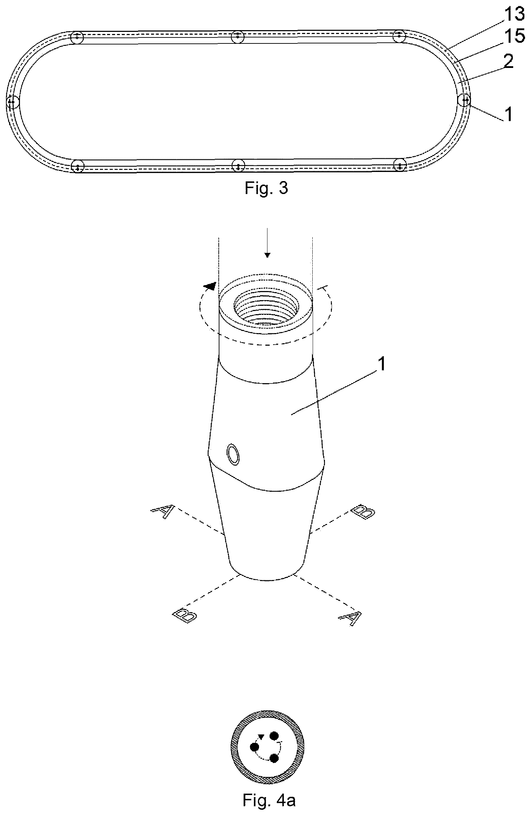

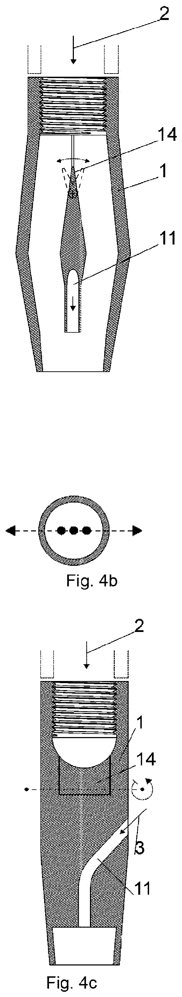

Fig. 1 eine schematische Darstellung einer Vorrichtung zum Ausbringen eines hydraulisch aushärtenden Baustoffes, wobei ein weiteres Medium eingebracht wird; Fig. 2a-2c zeigen jeweils einen Längsschnitt durch eine Düse mit verschiebbarem Rohr, wobei darunter die verschiedenen Positionen des Rohrs in der Düse dargestellt sind; Fig. 3 zeigt eine gedruckte Schicht (PCL) mit der entsprechenden Position des weiteren Mediums, wobei die Düse an verschiedenen Positionen angedeutet ist; und Fig. 4a-4c zeigen die Steuerung der Position des weiteren Mediums durch Drehen der Düse und eine alternative Positionierung des weiteren Mediums, wobei Fig. 4a eine perspektivische Ansicht ist, Fig. 4b ein Schnitt entlang der Linie A-A von Fig. 4a ist und Fig. 4c ein Schnitt entlang der Linie B-B von Fig. 4a ist.

### Beschreibung der Ausführungsarten

Die in Fig. 1 gezeigte Vorrichtung 100 weist eine Düse 1 zum Ausbringen eines hydraulisch aushärtenden Baustoffes 2, in welchen ein weiteres Medium 3 eingebracht wird, auf. In diesem Fall ist das weitere Medium 3 ein seilförmiges Bewehrungsmaterial oder ein Rohr/Schlauch/Kanal. Das weitere Medium 3 wird durch ein Hüllrohr 12 zur Düse 1 geführt und mit einem Antriebsrad 6 und einem Pressrad 7 gefördert. Das Pressrad 7 kann von einer Druckfeder 9 mittels eines Druckhebels 8 gegen das Antriebsrad 6 gedrückt werden. Das Antriebsrad 6 steuert die Abzugsgeschwindigkeit bzw. Zuführgeschwindigkeit, die an die Bewegungsgeschwindigkeit der Düse 1 angepasst wird. Das weitere Medium 3 kann mit einer Zentriervorrichtung 10 zentriert werden. Das Antriebsrad 6 und das Pressrad 7 schieben das weitere Medium 3 durch druckfeste Hüllrohre 12 zur Düse 1. Die Düse 1 ist so ausgebildet, dass ein Rohr 11 (siehe Fig. 2a-2c)durch die Seitenwand eingeführt ist und so im vom Baustoff 2 durchströmten Querschnitt platziert ist. Der Baustoff 2 umfließt dieses Rohr 11. Das weitere Medium 3 kann so in den Baustoff 2 eingebracht werden, wird von diesem umschlossen, aus der Düsenspitze heraus transportiert und kontinuierlich und positionsgenau in der Druckbahn (PCL) abgelegt. Ist kein kontinuierliches Einbringen des weiteren Mediums 3 erwünscht, muss die Zufuhr des weiteren Mediums 3 unterbrochen werden. Eine Unterbrechungsvorrichtung 4 (siehe Fig. 1) in Form einer Schneidvorrichtung ermöglicht das Abschneiden bzw. das Unterbrechen der Zufuhr des weiteren Mediums 3.

Fig. 2a-c zeigen eine Ausführungsform der Positionierung des Rohrs 11, durch welches das weitere Medium 3 gefördert wird. Hierbei bedingt der Vorschub des Rohrs 11 die Exzentrizität. Indem das Rohr 11 weiter in die Düse 1 geschoben wird, kann die Position des weiteren Mediums 3 an den linken Rand (Fig. 2a) gesteuert werden. Ein entsprechendes Herausziehen des Rohrs 11 bewirkt die Positionierung am rechten Rand (Fig. 2c).

Fig. 3 zeigt die Position des weiteren Mediums 3, das in den Baustoff 2 eingeführt wurde, nachdem eine Schicht (PCL) aufgetragen wurde. Die strichlierte Linie zeigt eine mögliche Positionierung des weiteren Mediums 3 in der Druckbahn. Das weitere Medium 3 ist in diesem Fall ein seilförmiges Bewehrungsmaterial 13. Es kann aber auch Additive oder Zusatzstoffe für den Baustoff 2 bzw. das Bindemittel umfassen, oder gar Schläuche/Rohre/Kanäle, die in Wänden oder Ähnlichem verlegt werden. Durch seilförmiges Bewehrungsmaterial 13, das außerhalb der neutralen Faser 15 eingebracht wird, kann der mechanische Widerstand gegen angreifende Kräfte deutlich gesteigert werden.

Fig. 4a-4c zeigen die Positionierungsmöglichkeit durch Drehen der Düse 1, wenn die Einbringung des weiteren Mediums 3 in der Düse 1 exzentrisch ist. So kann sogar ohne Bewegen des Rohres 11 die Position des weiteren Mediums 3 geändert werden. Sofern das Rohr 11 wie in Fig. 2a-2c entlang einer Achse bewegt werden kann, ermöglicht das Drehen der Düse 1 die Positionierung des Mediums 3 an jedem beliebigen Ort des gedruckten Querschnitts. Aus Fig. 4b und Fig. 4c ist eine weitere Ausführungsmöglichkeit des Positionierens des weiteren Mediums 3 ersichtlich. Hierbei wird die Fördermenge an Baustoff 2 durch eine Klappe 14 gesteuert. Die Klappe 14 bewirkt, dass mehr Baustoff 2 auf der einen Seite als auf der anderen Seite vorbeiströmt. Durch die größere Fördermenge an Baustoff 2 auf einer Seite wird das weitere Medium 3 auf die Seite mit weniger Volumenstrom Baustoff gedrückt bzw. verdrängt, dadurch kann die Position des weiteren Mediums 3 gesteuert werden. Entsprechend können auch zwei oder mehr Medien 3 auf eine Seite gedrückt werden.

## Patentansprüche

1. Vorrichtung (100) zum Ausbringen eines hydraulisch aushärtenden Baustoffes (2), wie Beton, Mörtel, Bindemittel und dergleichen, wobei in den Baustoff (2) zumindest ein weiteres Medium (3), beispielsweise Stahl, eingebracht wird, mit einer Düse (1) zur Zufuhr des flüssigen, pastösen oder plastischen Baustoffes(2), wobei in die Düse (1) zumindest ein Rohr (11) zur Zufuhr des zumindest einen weiteren Mediums (3) ragt und die Position des zumindest einen weiteren Mediums (3) innerhalb des Querschnitts der Düse (1) verstellbar ist, **dadurch gekennzeichnet, dass** die Position des zumindest einen weiteren Mediums (3) durch Drehung der Düse (1) veränderbar ist und entweder das zumindest eine Rohr (11) entlang einer Achse positionierbar ist oder die Position des weiteren Mediums (3) innerhalb des Querschnitts der Düse (1) durch Steuerung der Zufuhr des Baustoffes (2) über eine Klappe (14) verstellbar ist.

2. Vorrichtung nach Anspruch 1 mit positionierbarem Rohr, **dadurch gekennzeichnet, dass** zwei oder mehr Rohre vorgesehen sind, die alle positionierbar sind.

3. Vorrichtung nach einem der Ansprüche 1 bis 2, **dadurch gekennzeichnet, dass** zumindest eine Unterbrechungsvorrichtung (4) vorgesehen ist, um die Zufuhr des zumindest einen weiteren Mediums (3) zu unterbrechen.

4. Vorrichtung nach Anspruch 3, **dadurch gekennzeichnet, dass** eine Zuführvorrichtung (5) vorgesehen ist.

5. Verwendung der Vorrichtung nach einem der Ansprüche 1 bis 4 zum 3D-Druck.

6. Verwendung nach Anspruch 5, **dadurch gekennzeichnet, dass** zumindest zwei verschiedene Medien (3) eingebracht werden.

7. Verwendung nach Anspruch 5 oder 6, **dadurch gekennzeichnet, dass** das weitere Medium (3) oder zumindest eines der weiteren Medien (3) ein Bewehrungsmaterial (13) ist.

8. Verwendung nach Anspruch 7, **dadurch gekennzeichnet, dass** zumindest zwei seilförmige Bewehrungsmaterialien (13) mit unterschiedlichen Biegeradien verwendet werden und dass, wenn eine Kontur, die einen engeren Radius vorsieht als zumindest ein Biegeradius der Bewehrungsmaterialien (13), nur die Bewehrungsmaterialien (13) mit einem ausreichend kleinen Biegeradius eingebracht werden.

9. Verwendung nach Anspruch 7 oder 8, **dadurch gekennzeichnet, dass** die Position und Menge des Bewehrungsmaterials (13) aufgrund der geforderten Zugfestigkeit bzw. Biegezugfestigkeit gesteuert werden.

10. Verwendung nach einem der Ansprüche 7 bis 9, **dadurch gekennzeichnet, dass** das Bewehrungsmaterial (13) zur Verbesserung der Oberflächeneigenschaften oberflächenbehandelt ist.

## Claims

1. Device (100) for dispensing a hydraulically hardening building material (2), such as concrete, mortar, binder or the like, wherein at least one further medium (3), for example steel, is introduced into the building material (2), comprising a nozzle (1) for supplying the liquid, pasty or plastic building material (2), wherein at least one tube (11) for supplying the at least one further medium (3) extends into the nozzle (1), and the position of the at least one further medium (3) is adjustable within the cross-section of the nozzle (1), **characterized in that** the position of the at least one further medium (3) is changeable by rotation of the nozzle (1), and either the at least one tube (11) is positionable along an axis or the position of the further medium (3) within the cross-section of the nozzle (1) is adjustable by controlling the supply of the building material (2) via a flap (14).

2. Device according to claim 1 with positionable tube, **characterized in that** two or more tubes are provided, all of which are positionable.

3. Device according to one of claims 1 to 2, **characterized in that** at least one interruption device (4) is provided in order to interrupt the supply of the at least one further medium (3).

4. Device according to claim 3, **characterized in that** a feeding device (5) is provided.

5. Use of the device according to one of claims 1 to 4 for 3D printing.

6. Use according to claim 5, **characterized in that** at least two different media (3) are introduced.

7. Use according to claim 5 or 6, **characterized in that** the further medium (3), or at least one of the further media (3), is a reinforcement material (13).

8. Use according to claim 7, **characterized in that** at least two ropeshaped reinforcement materials (13) having different bending radii are used, and that, when a contour requiring a tighter radius than at least one bending radius of the reinforcement materials (13) is to be produced, only the reinforcement materials (13) having a sufficiently small bending radius are introduced.

9. Use according to claim 7 or 8, **characterized in that** the position and quantity of the reinforcement material (13) are controlled according to the required tensile strength and/or flexural tensile strength.

10. Use according to one of claims 7 to 9, **characterized in that** the reinforcement material (13) is surface-treated to improve surface properties.

## Revendications

1. Dispositif (100) destiné à l'extrusion d'un matériau de construction à prise hydraulique (2), tel que le béton, le mortier, un liant ou analogue, dans lequel au moins un autre milieu (3), par exemple de l'acier, est introduit dans le matériau de construction (2), comprenant une buse (1) pour l'alimentation du matériau de construction (2) liquide, pâteux ou plastique, au moins un tube (11) pour l'alimentation dudit au moins un autre milieu (3) s'étendant dans la buse (1), la position dudit au moins un autre milieu (3) à l'intérieur de la section transversale de la buse (1) étant réglable, **caractérisé en ce que** la position dudit au moins un autre milieu (3) peut être modifiée par rotation de la buse (1), et soit ledit au moins un tube (11) est positionnable le long d'un axe, soit la position de l'autre milieu (3) à l'intérieur de la section transversale de la buse (1) est réglable par commande de l'alimentation du matériau de construction (2) au moyen d'un volet (14).

2. Dispositif selon la revendication 1 avec tube positionnable, **caractérisé en ce que** deux ou plusieurs tubes sont prévus, tous étant positionnables.

3. Dispositif selon l'une des revendications 1 à 2, **caractérisé en ce qu'**au moins un dispositif d'interruption (4) est prévu pour interrompre l'alimentation dudit au moins un autre milieu (3).

4. Dispositif selon la revendication 3, **caractérisé en ce qu'**un dispositif d'alimentation (5) est prévu.

5. Utilisation du dispositif selon l'une des revendications 1 à 4 pour l'impression 3D.

6. Utilisation selon la revendication 5, **caractérisée en ce qu'**au moins deux milieux différents (3) sont introduits.

7. Utilisation selon la revendication 5 ou 6, **caractérisée en ce que** l'autre milieu (3) ou au moins l'un des autres milieux (3) est un matériau de renforcement (13).

8. Utilisation selon la revendication 7, **caractérisée en ce qu'**au moins deux matériaux de renforcement (13) en forme de câble présentant des rayons de courbure différents sont utilisés et que, lorsqu'un contour présentant un rayon plus petit qu'au moins un rayon de courbure des matériaux de renforcement (13) doit être réalisé, seuls les matériaux de renforcement (13) ayant un rayon de courbure suffisamment petit sont introduits.

9. Utilisation selon la revendication 7 ou 8, **caractérisée en ce que** la position et la quantité du matériau de renforcement (13) sont commandées en fonction de la résistance à la traction requise et/ou de la résistance à la flexion-traction.

10. Utilisation selon l'une des revendications 7 à 9, **caractérisée en ce que** le matériau de renforcement (13) est traité en surface afin d'améliorer ses propriétés de surface.
